# EUROPEAN PATENT APPLICATION

(11) **EP 4 678 311 A1**
(43) Date of publication of application: **14.01.2026**
(21) Application number: 24187095.5
(22) Date of filing: 08.07.2024
(51) Int. Cl.: B22F 10/28, B22F 12/37, B22F 12/55, B33Y 10/00, B33Y 30/00, B33Y 80/00, B29C 64/241

(54) **METHOD FOR ADDITIVE MANUFACTURING**

(71) Applicant: AIRBUS Operations GmbH, 21129 Hamburg (DE)
(72) Inventor: Gröne, Vincent, Hamburg (DE); Zimmermann, Jannik, Hamburg (DE)

(57) **Abstract**

A method (100) for additive manufacturing, preferably powder bed fusion, a component (50), the method (100) comprising the following steps:
depositing a printing material (20) with a material dispenser (14) to provide a powder bed (30); and fusing the printing material (20) in the powder bed (30) with a fusing device (18); wherein the powder bed (30) is being at least partly held in place by centrifugal forces.

## Description

### Technical Field

The present invention relates to a method for additive manufacturing.

### Background

Additive manufacturing, also known as 3D printing, is a modem manufacturing process. It offers numerous advantages, from design flexibility and reduced waste to the ability to create highly customized, complex, and intricate structures. However, one notable drawback that often comes with these advantages is the time-consuming nature of the additive manufacturing process.

A primary factor contributing to this time consumption is the fundamental layer-by-layer approach. In additive manufacturing, objects are constructed by depositing or curing material layer upon layer. Each layer must be carefully and precisely formed to ensure the overall integrity and accuracy of the final product. While this method allows for unprecedented detail and complexity, it inherently requires time, especially for intricate designs.

Compared to traditional subtractive manufacturing methods, where material is removed to shape an object, the layer-by-layer additive approach can be slower. Traditional machining processes often work on the entire object simultaneously, enabling rapid material removal and high-speed manufacturing. In contrast, additive manufacturing involves a sequential and meticulous buildup, which is time-intensive.

### Summary of the invention

It is an object to increase the speed in the additive manufacturing process.

This object is achieved by means of the subjects of the independent claims. Illustrative embodiments will be found in the dependent claims and the following description.

According to one aspect, a method for additive manufacturing of components, in particular by powder bed fusion 3D printing, comprising the steps of depositing a printing material with a material dispenser to provide a powder bed; and fusing the printing material in the powder bed with a fusing device; wherein the powder bed is being at least partly held in place by centrifugal forces.

According to an aspect, a manufacturing device for additive manufacturing of components, in particular by powder bed fusion 3D printing, is provided, wherein the manufacturing device is configured to carry out a corresponding method.

According to an aspect, a component, for example, a part for an aircraft, is provided, wherein the component is at least partly manufactured by a corresponding method.

According to an aspect, an aircraft is provided, comprising a corresponding component.

Any components of the manufacturing device can be aligned to be movable with respect to the powder bed along a rotational axis thereof. The printing material may be deposited under a continuous rotation of the powder bed. The powder bed or at least sections thereof may have an annular shape.

The proposed solution thus provides an innovative new approach for additive manufacturing, wherein the powder bed may be rotated with significant rotational velocity such that the printing material is being compressed due to that the reactive centrifugal forces exerted onto the powder bed by its circular motion are countered by corresponding centripetal forces exerted onto the powder bed by the manufacturing device. In other words, the reactive centrifugal force and the centripetal force together constitute a reaction-pair, wherein the two forces are equal and opposite to each other. The solution can be particularly helpful for increasing the manufacturing speed. This is especially advantageous, since manufacturing costs and delivery times can be significantly reduced, while an output of respective components produced by manufacturing devices can be significantly increased.

Moreover, the solution may be advantageous in that due to the centrifugal forces, the powder bed may be compressed, which in turn may help in increasing the density of the fused material. Thereby, when using printing materials containing metals, for example, densities of more than 95%, preferably 99.7 to 99.8 %, and most preferably up to a 100 % may be achieved. Thereby, a step of hot isostatic pressing (HIP) the components manufactured in order to reduce the porosity and increase density to a required level may be omitted, e.g., for metallic parts. This further helps in reducing manufacturing costs and delivery times. In comparison with the prior art, a higher output of respective components can be produced directly by respective manufacturing devices, possibly without any need of further increasing the density of the components after fusing the printing material.

Further developments can be derived from the dependent claims and from the following description. Features described with reference to devices and arrangements may be implemented as method steps, or vice versa. Therefore, the description provided in the context of the method applies in an analogous manner also to a respective manufacturing device. The functions of manufacturing device may be implemented as steps of the method and the method steps may be implemented as functions and/or elements of the manufacturing device and its components.

According to an embodiment of a method, the powder bed is being rotated such that it is being held by centripetal forces. With other words, centrifugal forces may be applied to the powder bed such that it may be held in place by resulting centripetal forces at any orientation in space. Hence, the powder bed may be rotating around an axis which can be arranged at any angle between vertical orientation and a horizontal orientation with respect to the ground. This further helps in improving flexibility of respective manufacturing processes.

According to an embodiment of a method, a building platform provides an inner circumferential support surface for holding the powder bed. The printing material is being dispensed along an inner circumferential support surface for holding the powder bed. A corresponding manufacturing device can comprise a building platform providing an inner circumferential support surface for holding the powder bed. This further helps in continuously forming the powder bed and thus increase manufacturing speed.

According to an embodiment of a method, the printing material is being continuously deposited at least for fusing a predefined section of the component. Certain sections of the component may be formed in a continuous process of depositing the printing material and fusing it thereafter. Thereby, manufacturing speeds may be further increased.

According to an embodiment of a method, the printing material is being dispensed in a radial direction and/or tangential direction to the powder bed. A corresponding manufacturing device can further comprise at least one printing material dispenser configured to dispense the printing material in a radial direction and/or tangential direction to the powder bed. For example, the printing material may be sprayed onto the building platform and/or the powder bed thereon. In particular, with the powder bed rotating around a vertical axis of rotation, the printing material may be sprayed onto the power bed as required by a certain application. With a horizontal axis of rotation, the material may be dropped onto the building platform and/or the powder bed thereon as required by a certain application. Thereby, the method can be further adapted as desired, in particular for continuously forming respective components which in turn may again help in increasing manufacturing speeds.

According to an embodiment of a method, printing material is being simultaneously and/or subsequently dispensed by at least two printing material dispensers. A corresponding manufacturing device can further comprise further comprising at least two printing material dispensers adapted to simultaneously and/or subsequently dispense the printing material. The at least two printing material dispensers may be configured to dispense the same or different materials in different regions of the powder bed. Thereby, flexibility, versatility and speed of the printing process may be further enhanced.

According to an embodiment of a method, the method further comprises the step of dispensing an additive to the powder bed and/or fused printing material. A corresponding manufacturing device can further comprise at least one additive dispenser for dispensing and additive to the powder bed or fused printing material. As additives, pigments, coloring agents, adhesives, corrosion inhibitors, or alike, may be added to the powder bed and/or the fused printing material. This helps in further enhancing flexibility, versatility, and speed of the manufacturing process.

According to an embodiment of a method, the method further comprises step of levelling an inner circumference of the powder bed. A corresponding manufacturing device can further comprise at least one recoater configured to level the printing material. The at least one recoater may be adapted to continuously level the powder bed. Thereby, in particular manufacturing speeds may be further increased.

According to an embodiment of a method, the method further comprises the step of levelling the printing material for forming a circular ring-shaped section of the powder bed. A number of recoaters may be provided for simultaneously levelling the powder bed. Alternatively, or additionally, a cutting tool may be provided for shaping the powder bed for forming a circular ring-shaped section of the powder bed. In other words, circular ring-shaped section of the powder bed can be formed as desired or required in an axial and/or radial direction with respect to the axis of rotation of the powder bed. This helps in further enhancing flexibility, versatility, and speed of the manufacturing process.

According to an embodiment of a method, the method further comprises the step of fusing a circular section and/or radial region of the powder bed. A corresponding manufacturing device can further comprise at least one fusing device configured to fuse a circular section and/or radial region of the powder bed. For example, a fusion device may apply a continuous fusion means for fusing respective circular section. A flickering fusion means may be provided to fuse certain radial regions. This again helps in further enhancing flexibility, versatility, and speed of the manufacturing process.

According to an embodiment of a method, the fusing device is being rotated along with the powder bed. The fusing device can be configured to rotate along with the powder bed in in a manner that the fusing takes place in a stationary manner in the rotating powder bed. Thereby, in particular circumferentially confined sections of the powder bed may be fused as radial sections. This also helps in further enhancing flexibility, versatility, and speed of the manufacturing process.

According to an embodiment of a manufacturing device, the manufacturing device comprises a build platform having at least one cylindrical section providing an inner circumference for carrying the powder bed. The manufacturing device provided with a set of cylindrical sections of different shapes and/or sizes which can be selected according to the respective manufacturing application. This may further help in enhancing flexibility, versatility, and speed of the manufacturing process.

Alternatively, or additionally, a continuous method for additive manufacturing, preferably powder bed fusion, a component is provided.

The method comprising the following steps:
Providing at least one build platform, wherein the at least one build platform comprises a circular ring-shaped upper surface and is configured to continuously move downwards,
Providing a printing material dispenser and a recoater, wherein the printing material dispenser and the recoater are configured to move relatively to the at least one build platform,
Providing a fusing device, wherein the fusing device is configured to fuse the printing material,
Depositing, via the printing material dispenser, printing material on the circular ring-shaped upper surface of the at least one build platform, while moving the printing material dispenser relatively to the at least one build platform,
Leveling, via the recoater, the printing material on the circular ring-shaped upper surface, while moving the recoater relatively to the at least one build platform,
Fusing, via the fusing device, the printing material, while moving the fusing device relatively to the at least one build platform
Moving downwards the at least one build platform,
   wherein the steps of depositing, leveling, fusing and moving downwards are executed simultaneously and continuously, until the component is manufactured,
Taking out the component.

In other words, the method comprises a series of steps that work continuously to create the desired components.. In contrast to the state of the art, where a recoater provides the powder alternating to the following printing process, the invention eliminates the time effort of the recoater as it is working alongside, continuously to the printing process.

To start, at least one build platform is provided, characterized by a circular ring-shaped upper surface, and this platform continuously moves in a downward direction. Simultaneously, a printing material dispenser and a recoater are provided, with the ability to move relative to the build platform. Additionally, a fusing device configured to melt the printing material is provided.

The process starts with the printing material dispenser depositing material onto the circular ring-shaped upper surface of the one or multiple build platforms, while the build platform is in continuous downward motion. The recoater, also in continuous relative motion with the build platform, then levels the deposited material on the circular ring-shaped upper surface.

Concurrently, the fusing device operates to melt the deposited printing material, all while it moves continuously in relation to the build platform.

During the entire process, the build platform continues to move downward. These actions, encompassing material deposition, leveling, fusion, and the platform's downward movement, are executed simultaneously and continuously until the component is fully manufactured.

Upon the completion of the manufacturing process, the created component is removed from the system. This method, characterized by its continuous and simultaneous execution of steps, optimizes the additive manufacturing process, promoting efficiency and consistency in component production.

Additive manufacturing, preferably powder bed fusion, is an advanced manufacturing process that builds three-dimensional objects by adding material layer by layer. It is a highly precise and versatile technique, often referred to as 3D printing, that contrasts with traditional subtractive manufacturing methods where material is removed to create a part. In the context of powder bed fusion:
Additive Manufacturing refers to a group of technologies that create objects by adding material, typically in thin layers. The opposite of subtractive manufacturing, it allows for greater design freedom and the production of complex and customized components.

Powder bed fusion is a specific additive manufacturing process where a powdered material, often a metal or polymer, is selectively fused together using a heat source, such as a laser or electron beam. The process takes place on a powder bed, where each layer of material is fused to the layer below, forming a solid object.

This approach offers benefits such as design flexibility, reduced waste, and the ability to create intricate structures.

A build platform, in the context of manufacturing and additive manufacturing, is a component where the creation of three-dimensional objects takes place. It serves as the foundation upon which successive layers of material are deposited, solidified, or fused to construct the final component. The build platform plays a crucial role in ensuring the stability and accuracy of the manufacturing process by providing a solid base for the object being produced.

The upper surface of the build platform is circular and ring-shaped, meaning it comprises a circular or doughnut-like design. This shape may have specific applications and advantages in certain manufacturing processes.

The build platform is configured to move in a continuous and uninterrupted downward direction during the manufacturing process. This continuous movement is a defining feature of the platform's operation and is essential for the specific manufacturing method being described.

In the context of additive manufacturing or 3D printing, a build platform is where successive layers of material are deposited and fused to create a three-dimensional object.

A printing material dispenser is a device or system responsible for precisely depositing the material used to build the object in additive manufacturing. The material may vary depending on the specific technology and application and may include plastics, metals, ceramics, or other substances. The printing material dispenser accurately controls the feeding of the material, layer by layer in a continuous manner, following the digital design or blueprint, ensuring the component's formation.

A recoater, also known as a spreader or leveling device, is a component that works in conjunction with the printing material dispenser. Its primary function is to ensure an even and uniform distribution of the material that has been deposited on the build platform or previous layers. This helps maintain the integrity and quality of each layer by smoothing and leveling the material before the next layer is added. Recoaters are particularly critical in powder-based additive manufacturing techniques where loose powder material is spread evenly to create a new layer.

A fusing device is a mechanical or electronic system designed to selectively melt or fuse the material used in additive manufacturing. It is responsible for precisely applying heat or energy to specific areas of the material, causing it to bond or solidify, layer by layer. The controlled fusion of material is a fundamental step in creating a solid and cohesive component during additive manufacturing. The fusing device ensures that the material adheres to the previous layer and forms the desired shape, following the digital design or model. Depending on the technology and material being used, fusing devices can employ various methods, such as lasers, electron beams, or other heat sources, to achieve accurate and reliable fusion, resulting in the successful creation of the final object.

According to one embodiment the fusing device is selected from a group consisting of laser-based fusing devices, electron beam fusing devices, inkjet fusing devices, heated nozzle or extrusion-based fusing devices, plasma-based fusing devices, ultraviolet light-based fusing devices or resistance heating fusing devices or a combination thereof.

Laser-based Fusing Devices use high-powered lasers to selectively melt or sinter material powders or resins. Laser-based fusing is widely used in technologies like Selective Laser Sintering (SLS) and Stereolithography (SLA).

Electron Beam Fusing Devices use electron beams to fuse metal powders together in technologies like Electron Beam Melting (EBM). EBM is particularly suited for 3D printing of metal components.

Inkjet Fusing Devices use a inkjet technology, adapted for 3D printing, that precisely deposits droplets of a binding agent or ink onto a powdered material. This method is used in for example in binder j etting technology.

Heated Nozzle or Extrusion-based Fusing Devices are commonly used in Fused Deposition Modeling (FDM) 3D printers. They extrude molten thermoplastic material onto the build platform.

Plasma-based Fusing Devices use plasma as a heat source to fuse materials.

Ultraviolet (UV) Light-based Fusing Devices: are used in stereolithography (SLA) and digital light processing (DLP) 3D printing, wherein a UV light source is used to selectively cure liquid resin layer by layer.

Resistance Heating Fusing Devices is used preferably in powder bed fusion technologies, wherein electrical resistance heating elements are used to fuse the material layers.

According to one embodiment, the at least one build platform is rotating.

Rotating the build platform may help achieve uniform layer deposition. This rotation can distribute material more evenly, reducing the risk of inconsistencies or defects in the printed object's structure.

Rotating the build platform may reduce the visibility of surface imperfections. This can lead to a smoother and more aesthetically pleasing finish on the final product.

In certain applications, rotating the build platform can improve printing speed. It allows for simultaneous printing on multiple areas of the object, increasing the throughput.

The rotation of the build platform may enable the production of intricate, multi-axis structures that may be challenging or impossible to create with a stationary platform.

In certain powder-based additive manufacturing processes, like powder bed fusion, rotating the build platform can ensure better powder distribution, reducing the risk of powder settling or uneven material distribution.

The ability to control the rotation of the build platform allows for customization and optimization of the printing process to suit the specific requirements of a project.

According to one embodiment, the printing material dispenser and/or the fusing device and/or the recoater move around the at least one build platform in a circular trajectory.

Circular movement ensures a consistent and uniform deposition of material across the build platform. This results in more even layer thickness, reducing the risk of material inconsistencies.

Circular trajectories may help minimize visible surface imperfections, enhancing the overall quality and aesthetics of the printed object.

The circular path allows for more efficient use of time and resources. Simultaneous printing on different areas of the object can increase printing speed and overall productivity.

Circular motion facilitates the creation of overhangs and intricate geometries with greater stability and material waste. Circular movement accommodates the production of intricate, multi-axis structures that may be challenging to achieve with linear or static movements.

The combined effect of a rotating build platform and circular motion of printing and fusing components leads to superior material distribution, surface quality, printing efficiency, and the capacity to produce complex, high-quality objects with reduced support requirements. It optimizes additive manufacturing processes, making them more efficient, precise, and versatile.

According to one embodiment, the printing material is at least one of: thermoplastics, thermosetting plastics, metals, ceramic, metal, composites, biomaterials.

Thermoplastics: These materials become soft and moldable when heated and solidify when cooled. Common thermoplastics used in 3D printing include ABS (Acrylonitrile Butadiene Styrene), PLA (Polylactic Acid), PETG (Polyethylene Terephthalate Glycol), and Nylon. These materials are widely used for making prototypes, consumer goods, and structural components.

Thermosetting Plastics undergo a chemical change when heated and, once set, cannot be remelted. Common examples include epoxy resins, phenolic resins, and melamine resins. They are used for high-temperature applications, electrical components, and composites.

Metals can be used to create metal parts using materials like stainless steel, aluminum, titanium, and nickel alloys. These are used in aerospace, automotive, and medical applications for their strength and durability.

Ceramic materials like zirconia, alumina, and silicon carbide can be 3D printed for applications such as dental implants, aerospace components, and advanced electronics.

Composite materials combine multiple substances to create materials with unique properties. For example, carbon fiber-reinforced polymers are used in lightweight, high-strength components.

Paper-based materials are used in some 3D printing processes like Laminated Object Manufacturing (LOM) to create paper-based models and prototypes.

Biomaterials such as hydrogels and biodegradable polymers are used in the field of bioprinting to create tissues, organs, and medical implants.

Sand-based materials are used in some industrial 3D printers to produce molds and cores for metal casting.

Wax is used in jewelry casting for creating intricate patterns that can be used to make molds for metal casting.

In construction 3D printing, concrete and other cement-based materials are used to create large-scale structures, such as houses and bridges.

According to one embodiment, the fusing device is a plurality of fusing devices.

Multiple fusing devices may work in parallel, allowing for the simultaneous melting or fusing of material in different areas of the object. This substantially reduces the time required to complete the printing process.

Parallel fusing devices may help distribute heat more evenly, resulting in improved material bonding and reduced internal stresses. This can lead to objects with greater structural integrity and mechanical strength.

The use of multiple fusing devices enables the creation of complex, multi-axis structures and geometries that may be challenging to achieve with a single fusing device. This enhances design freedom and the range of printable objects.

Parallel fusing may help control the heat distribution more effectively, reducing the risk of issues such as warping or overheating in the printed object.

Multiple fusing devices are particularly beneficial for large-scale or industrial 3D printing applications, where speed and efficiency are essential.

The ability to use multiple fusing devices can be advantageous for industries requiring mass production of identical or similar components, as it enables rapid and concurrent manufacturing.

Depending on the specific requirements of a project, the number and arrangement of fusing devices can be customized to optimize the printing process, ensuring that it meets the desired quality and efficiency standards.

According to one embodiment, the printing material dispenser is a plurality of printing material dispensers.

Multiple dispensers allow for the simultaneous use of different materials in the same 3D printing process. This capability is particularly useful for multi-material or multi-color printing, enabling the creation of objects with varying material properties or aesthetics.

Parallel material dispensers can work together to deposit material more rapidly, reducing the overall printing time. This is especially valuable in large-scale or industrial applications where productivity is crucial.

The use of multiple dispensers allows for the intricate combination of materials in complex patterns or gradients, providing novel material properties and design possibilities. When one material dispenser is not in use, others can continue printing, minimizing downtime and enhancing the overall printing efficiency. The number and arrangement of material dispensers may be customized to meet the specific requirements of a project. This provides flexibility in controlling material usage and design precision. Multiple material dispensers may create objects with diverse characteristics, such as flexible and rigid sections or objects with support structures made from dissolvable materials. The capability to use multiple material dispensers is particularly advantageous in industries that require high-volume production of customized or intricate components.

According to one embodiment, the recoater is a plurality of recoaters.

Multiple recoaters may work in parallel to evenly distribute the printing material across the build platform, reducing the risk of uneven layer thickness and material irregularities. Parallel recoaters can level and prepare the material more rapidly, speeding up the printing process. This is particularly advantageous for large-scale or industrial applications. The coordinated action of multiple recoaters can help to minimize visible surface imperfections, resulting in a smoother and higher-quality finish on the printed object. Parallel recoaters can effectively prepare overhangs and intricate geometries with greater stability, reducing the requirement for extensive support structures and material waste. The use of multiple recoaters allows for the creation of complex, multi-axis structures and geometries, broadening design possibilities. For large-scale additive manufacturing, multiple recoaters can ensure even material distribution across a broader build platform, contributing to efficient and consistent production. The number and arrangement of recoaters can be tailored to meet the specific needs of a project, optimizing the printing process for quality and efficiency.

According to one embodiment, the at least one build platform moves down one layer height of the printing material with one revolution. The build platform's downward movement with each revolution ensures that each new layer of material is accurately positioned. This precision may be crucial for maintaining the object's dimensional accuracy.

The coordinated movement guarantees that each layer has a uniform thickness, reducing the risk of uneven layer deposition or inconsistencies in the object's structure. By ensuring that each layer is evenly and accurately placed, the process helps minimize visible surface imperfections, contributing to a smoother and more aesthetically finish on the final product. Simultaneous layer deposition and vertical movement can optimize the printing speed, as it combines layer addition with platform descent. This can significantly reduce the time required to complete the printing process. The precise control of layer height and material deposition can help reduce material waste, as it ensures that material is applied only where needed, with minimal excess. The ability to control the downward movement of the build platform with each revolution allows for the customization and optimization of the 3D printing process, ensuring that it meets the specific requirements of a project or design.

According to one embodiment, the at least one build platform rotates with an angular velocity of less than 20 s⁻¹, preferably less 10 s⁻¹, most preferably 5 s⁻¹.

The velocity depends on the size (radius) of the machine (v = (2*pi*r)/t). In order to increase the v to its maximum (preferably) the mass (m) of the material that is printed is to be considered, as the centrifugal force limits the process (Fz = m * ((v^2)/r). In addition, the friction coefficient (µ) of the material is to be considered as well (Ff = µ * m * g).

The velocity can be pushed up to the point where the centrifugal and friction forces that act on the uppermost layer of powder, are similar in magnitude. This depends on the powder (amongst others on the density, particle size distribution, particle shape, humidity) and build plate geometry.

According to one embodiment, the throughput of the printing material dispenser is less than 30 g/s, preferably less than 10 g/s, most preferably less than 5 g/s.

The throughput of the printing material is dependent on the angular velocity

According to one embodiment, the component is a plurality of components. The additive manufacturing of multiple components allows for the simultaneous production of several objects or parts, increasing the overall manufacturing throughput and efficiency. Different components may be customized or specialized for various manufacturing tasks, optimizing the manufacturing process for specific requirements. In additive manufacturing, a plurality of components may be used to enable multi-material or multi-color printing, expanding the range of design possibilities. Multiple components may be strategically located at different points in a production line, providing flexibility and adaptability to changing manufacturing needs. A plurality of components is particularly beneficial for high-volume manufacturing, allowing for efficient and large-scale production of identical or similar components. The number and arrangement of components may be tailored to meet the specific requirements of a project, ensuring that the manufacturing process is optimized for quality and efficiency.

According to one embodiment, the circular ring width of the circular ring-shaped upper surface is less than 5000 mm, preferably less 3000 mm, most preferably 1000 mm.

According to one aspect, a component, manufactured with a above mentioned continuous method.

According to one aspect, an aircraft, comprises a component manufactured with a above mentioned continuous method.

### Brief description of the figures

Fig. 1 shows a perspective view of an embodiment of an arrangement for continuous powder bed fusion;
Fig. 2 shows a top view of the arrangement for continuous powder bed fusion shown in Fig. 1;
Fig. 3 shows a continuous method for additive manufacturing;
Fig. 4 shows a perspective view of another embodiment of an arrangement for continuous powder bed fusion; and
Fig. 5 shows an apparatus, in particular a vehicle, in the form of an aircraft, comprising a component manufactured by a method for additive manufacturing.

### Detailed description

The illustrations in the figures are schematic and not to scale. If the same reference signs are used in different figures in the following description of the figures, they designate identical or similar elements. However, identical or similar elements can also be designated by different reference symbols.

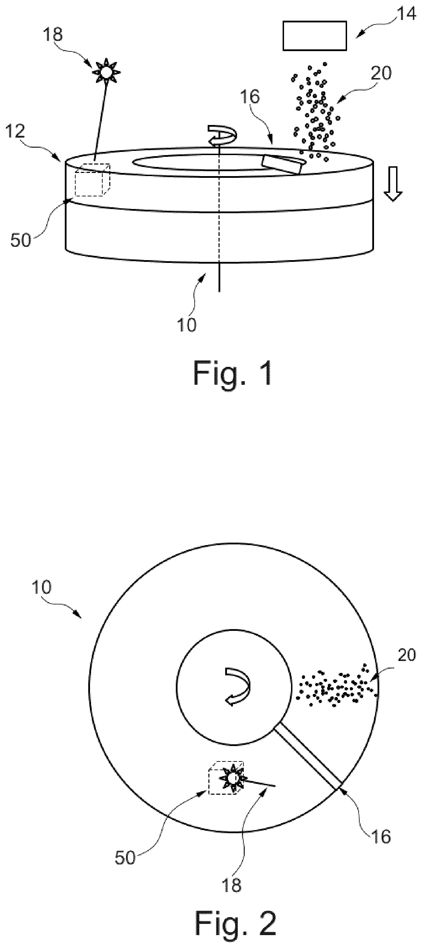

Fig. 1 shows a perspective view of an arrangement for continuous powder bed fusion. A continuous additive manufacturing method 100, in the shown embodiment in form of powder bed fusion, is employed to fabricate a component 50. This method 100 is a series of steps, ensuring the efficient and precise construction of the desired component 50.

The method 50 begins with the providing of a build platform 10 featuring a circular ring-shaped upper surface 12. The platform 10 is configured to undergo continuous downward movement, a crucial feature in the manufacturing method 100.

Integral to this method 100 is the presence of a printing material dispenser 14 and a recoater 16. Both of these components are configured to move in harmony with the descending build platform 10. The printing material dispenser 14 is configured to accurately depositing the printing material 20 onto the circular ring-shaped upper surface 12 of the build platform 10. Simultaneously, the recoater 16 is responsible for ensuring the even distribution and leveling of the deposited printing material 20, guaranteeing consistent layer thickness and overall quality.

The fusing device 18 is provided to fuse the deposited printing material 20, thus setting the foundation for the component's construction. As the printing material 20 is continuously deposited, leveled, and fused, the build platform 10 continuously descends.

This continuous downward movement ensures that the component 50 is constructed layer by layer, with the continuous steps of deposition, leveling, and fusing executed continuously. Once the component 50 has been fully manufactured to its precise specifications, the method 100 concludes with the removal of the finished component 50 from the build platform 10.

This approach offers a seamless and continuous nature, where each step is executed without interruption, resulting in the creation of intricate components 50 with precision and efficiency.

Fig. 2 shows a top view of an arrangement for continuous powder bed fusion.

The method's 100 systematic approach ensures that the desired component is constructed with meticulous accuracy. It all begins with the introduction of a specialized build platform 10. The platform 10 comprises a circular ring-shaped upper surface 12 and is specially configured to execute continuous downward movements.

This ongoing downward movement ensures the component 50 takes form layer by layer, with the steps of deposition, leveling, and fusing executed continuously and without interruption. Once the component 50 has been fully manufactured to its precise specifications, the method culminates with the careful removal of the finished component from the build platform 10.

In the shown embodiment the built platform 10 is rotating. Rotating the build platform 10 achieves a uniform layer deposition. This rotation can distribute material 20 more evenly, reducing the risk of inconsistencies or defects in the printed object's structure.

Rotating the build platform 10 further reduces the visibility of surface imperfections. This can lead to a smoother and more aesthetically finish on the final component 50.

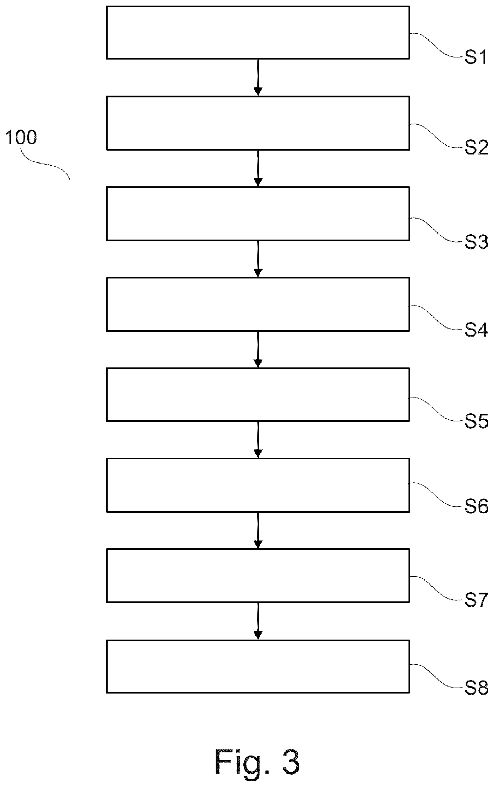

Fig 3 shows a flowchart of the continuous method 100 for additive manufacturing, preferably powder bed fusion, a component 50. The method 100 comprises the following steps:
S 1 Providing at least one build platform 10, wherein the at least one build platform comprises 10 a circular ring-shaped upper surface 12 and is configured to continuously move downwards,
S2 Providing a printing material dispenser 14 and a recoater 16, wherein the printing material dispenser 14 and the recoater 16 are configured to move relatively to the at least one build platform 10,
S3 Providing a fusing device 18, wherein the fusing device 18 is configured to fuse the printing material,
S4 Depositing, via the printing material dispenser 14, printing material 20 on the circular ring-shaped upper surface 12 of the at least one build platform 10, while moving the printing material dispenser 14 relatively to the at least one build platform 10,
S5 Leveling, via the recoater 16, the printing material 20 on the circular ring-shaped upper surface 12, while moving the recoater 16 relatively to the at least one build platform 10,
S6 Fusing, via the fusing device 18, the printing material 20, while moving the fusing device 18 relatively to the at least one build platform 10,
S7 Moving downwards the at least one build platform 10,
   wherein the steps of depositing, leveling, fusing and moving downwards are executed simultaneously and continuously, until the component (50) is manufactured,
S8 Taking out the component 50.

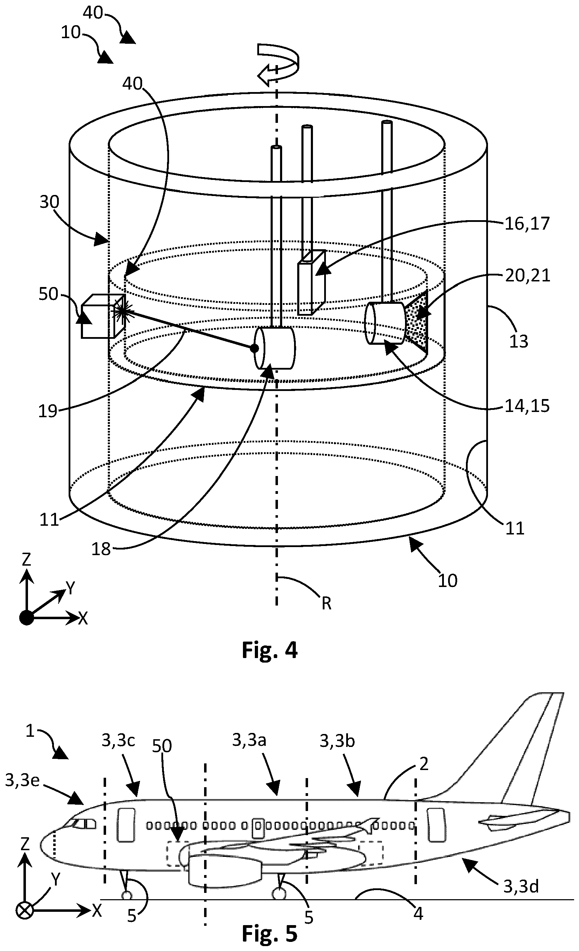

Fig. 4 shows a perspective view of another embodiment of an arrangement for continuous powder bed fusion. The arrangement may be part of the respective manufacturing device 40 extending along a longitudinal direction X, the transverse direction Y and a height direction Z together constituting a Cartesian coordinate system. The build platform 10 may provide a support surface 11 in the form of an inner circumferential surface of a cylindrical section 13 of the build platform 10. The build platform 10 is configured to rotate around an axis of rotation R which, in the present example, extends essentially in parallel to the height direction Z. Alternatively, or additionally, the axis of rotation R may be adjusted in any angle desired or required such that it may extend in parallel to the longitudinal direction X and/or the transverse direction Y. In rotating the build platform 10 with the support surface 11 around the axis of rotation R, the printing material 20 deposited on the build platform 10 and/or a powder bed 34 of the printing material 20 is at least section-wise held in place by centripetal forces directed radially away from the inner circumferential surface of the cylindrical section 13 towards the axis of rotation R due to corresponding reactive centrifugal forces extending radially away from the axis of rotation R.

The printed material dispenser 14, recoater 16 and/or the fusion device 18 may extend into an inner space formed in the cylindrical section of the built platform 10 and/or the powder bed 30. The printing material dispenser 14 may spray and/or drop the printing material 20 onto the build platform 10 and/or the powder bed 30 as desired or required according to the respective orientation of the axis of rotation R. The recoater 16 can again level the printing material 20 as required. The cutter 17 may be provided in addition to the recoater 16 and/or integrated therein to level and/or cut the printing material 20 in the radial and/or axial direction with respect to the axis of rotation R, such that, for example, a ring-shaped section 40 of the powder bed 30 may be formed. An additive dispenser 15 may be provided for adding an additive 21 to the printing material 20, the powder bed 30 and/or the component 50. The additive dispenser 15 may be provided in addition to the printing material dispenser 14 and/or integrated therein.

The fusing device 18 can emit fusing means 19 such as a laser beam to fuse the printing material 20 in order to form the component 50. The fusing device 18 can be held stationary with respect to the rotating building platform 10 and/or may rotate along with the building platform, for example in a synchronous manner. In that respect, it may be advantageous to arrange the fusing device 18 such that an axis of rotation of the fusing device lies on the axis of rotation R of the building platform 10. Alternatively, or additionally, the fusing device 18 may proj ect the fusing means in an intermittent manner, such as by flickering, to fuse radial sections of the printing material 20 in the powder bed 30. Alternatively, or additionally, the fusing device 18 may be operated such that circumferential sections of the powder bed 30 are being fused.

Consequently, a continuous, e.g., vertical, high-speed process can be provided, where the build platform 10 is or comprises a continuously rotating cylinder. The rotational speed of the cylinder is fast enough so that the powder bed 30 and embedded created parts or parts 50 can be held vertically as a result of respective centripetal and reactive centrifugal forces. The rotation of the cylinder can be increased to increase production times. The printing material dispenser 14, the recoater 46, and the fusing device 18 may move towards the center of the rotating cylinder, at the speed at which new layers of powder are being deposited. If the fusing device 18 is a laser or similar source, it might remain stationary.

As such a process may not allow a slow powder bed 30 tempering within the process due to its speed, the printing material 20 may be pre-tempered before being dispensed into the powder bed 30. In "conventional" Powder Bed Fusion (PBF), with a rectangular build platform and an iterative print process, up to 40% is lost due to recoating. If recoating times could be eliminated or at least reduced, throughput of one PBF machine could be increased accordingly Due to the rotation of the build platform 10, powder deposition, recoating and powder fusion may take place at the same time. The three processes that conventionally happen one after the other iteratively can now be carried out continuously and in parallel. Any extra time due to sequential recoating and powder deposition are completely eliminated. The process time may now only be driven by the speed of the fusion process, which can be further increase by multiple fusing devices 18 and multiple recoaters 16 and/or multiple printing material dispensers 15. It is conceivable that the increased pressure that the bed powder experiences due to centrifugal forces (g-forces) has a positive effect on the produced parts.

Fig. 5 shows an apparatus, in particular a vehicle, in the form of an aircraft 1, comprising a component 50 manufactured by a method for additive manufacturing, shows a schematic side view of the aircraft 1 comprising a support structure 2 in the form of a fuselage having several support sections 3, joined together. For example, the support structure sections 3, 3a, 3b, 3c, 3d, 3e. The support structure 2 may rest on a ground 4 by means of a landing gear 5. Any part, component, or section 3 of the aircraft 1 may be provided as and/or comprise the component 40.

### Reference Signs

- 10: build platform
- 11: support surface
- 12: circular ring-shaped upper surface
- 13: cylindrical section
- 14: printing material dispenser
- 15: additive dispenser
- 16: recoater
- 17: cutter
- 18: fusing device
- 19: fusing means
- 20: printing material
- 21: additive
- 30: powder bed
- 40: manufacturing device
- 50: Component
- 100: Method

- R: axis of rotation
- X: longitudinal direction
- Y: transverse direction
- Z: height direction

### Aspects

1. A continuous method (100) for additive manufacturing, preferably powder bed fusion, a component (50), the method (100) comprising the following steps:
   (S 1) Providing at least one build platform (10), wherein the at least one build platform comprises (10) a circular ring-shaped upper surface (12) and is configured to continuously move downwards,
   (S2) Providing a printing material dispenser (14) and a recoater (16), wherein the printing material dispenser (14) and the recoater (16) are configured to move relatively to the at least one build platform (10),
   (S3) Providing a fusing device (18), wherein the fusing device (18) is configured to fuse the printing material,
   (S4) Depositing, via the printing material dispenser (14), printing material (20) on the circular ring-shaped upper surface (12) of the at least one build platform (10), while moving the printing material dispenser (14) relatively to the at least one build platform (10),
   (S5) Leveling, via the recoater (16), the printing material (20) on the circular ring-shaped upper surface (12), while moving the recoater (16) relatively to the at least one build platform (10),
   (S6) Fusing, via the fusing device (18), the printing material (20), while moving the fusing device (18) relatively to the at least one build platform (10),
   (S7) Moving downwards the at least one build platform (10),
      wherein the steps of depositing, leveling, fusing and moving downwards are executed simultaneously and continuously, until the component (50) is manufactured,
   (S8) Taking out the component (50).
2. The continuous method (100) for additive manufacturing according to aspect 1, wherein the fusing device (18) is selected from a group consisting of: laser-based fusing devices, electron beam fusing devices, inkjet fusing devices, heated nozzle or extrusion-based fusing devices, plasma-based fusing devices, ultraviolet light-based fusing devices, resistance heating fusing devices.
3. The continuous method (100) for additive manufacturing according to one of the preceding aspects,
   wherein the at least one build platform is rotating.
4. The continuous method (100) for additive manufacturing according to one of the preceding aspects,
   wherein the printing material dispenser (14) and/or the fusing device (18) and/or the recoater (16) move around the at least one build platform (10) in a circular trajectory.
5. The continuous method (100) for additive manufacturing according to one of the preceding aspects,
   wherein the printing material (20) is at least one of: thermoplastics, thermosetting plastics, metals, ceramic, metal, composites, biomaterials.
6. The continuous method (100) for additive manufacturing according to one of the preceding aspects,
   wherein the fusing device (18) is a plurality of fusing devices.
7. The continuous method (100) for additive manufacturing according to one of the preceding aspects,
   wherein the printing material dispenser (14) is a plurality of printing material dispensers.
8. The continuous method (100) for additive manufacturing according to one of the preceding aspects,
   wherein the recoater (16) is a plurality of recoaters.
9. The continuous method (100) for additive manufacturing according to one of the preceding aspects,
   wherein the at least one build platform (10) moves down one layer height of the printing material (20) with one revolution.
10. The continuous method (100) for additive manufacturing according to one of the aspects 3 to 9,
   wherein the at least one build platform (10) rotates with an angular velocity of less than 20 s⁻¹, preferably less 10 s⁻¹, most preferably 5 s⁻¹.
11. The continuous method (100) for additive manufacturing according to one of the preceding aspects
   wherein the throughput of the printing material dispenser (14) is less than 30 g/s, preferably less than 10 g/s, most preferably less than 5 g/s.
12. The continuous method (100) for additive manufacturing according to one of the preceding aspects,
   wherein the component (50) is a plurality of components.
13. The continuous method (100) for additive manufacturing according to one of the preceding aspects,
   wherein a circular ring width of the circular ring-shaped upper surface (12) is less than 5000 mm, preferably less 3000 mm, most preferably 1000 mm.
14. Component (50), manufactured with a continuous method (100) according to any one of aspects 1 to 13.
15. Aircraft, comprising a component according to aspect 14.

## Claims

1. Method for additive manufacturing of components (50), in particular by powder bed fusion 3D printing, comprising the steps of
depositing a printing material (20) with a material dispenser (14) to provide a powder bed (30); and
fusing the printing material (20) in the powder bed (30) with a fusing device (18); wherein the powder bed (30) is being at least partly held in place by centrifugal forces.

2. Method according to claim 1, wherein the powder bed (50) is being rotated such that it is being held by centripetal forces.

3. Method according to claim 1 or 2, wherein the printing material is being dispensed along an inner circumferential support surface for holding the powder bed (30).

4. Method according to at least one of claims 1 to 3, wherein the printing material (20) is being continuously deposited at least for fusing a predefined section of the component (50).

5. Method according to at least one of claims 1 to 4, wherein the printing material (20) is being dispensed in a radial direction and/or tangential direction to the powder bed (30).

6. Method according to at least one of claims 1 to 5, wherein printing material (20) is being simultaneously and/or subsequently dispensed by at least two printing material dispensers (14).

7. Method according to at least one of claims 1 to 6, further comprising the step of dispensing an additive to the powder bed (30) and/ or fused printing material.

8. Method according to at least one of claims 1 to 7, further comprising the step of levelling an inner circumference of the powder bed (30).

9. Method according to at least one of claims 1 to 8, comprising the step of levelling the printing material for forming a circular ring-shaped section of the powder bed (30).

10. Method according to at least one of claims 1 to 9, further comprising the step of fusing a circular section and/or radial region of the powder bed (30).

11. Method according to at least one of claims 1 to 9, wherein the fusing device (18) is being rotated along with the powder bed (30).

12. Manufacturing device (40) for additive manufacturing of components (50), in particular by powder bed fusion 3D printing, wherein the manufacturing device (40) is configured to carry out a method according to at least one of steps 1 to 11.

13. Manufacturing device (40) according to claim 12, comprising a build platform (10) having at least one cylindrical section providing an inner circumference for carrying the powder bed (30).

14. Component (50), for example, a part for an aircraft, wherein the component (50) is at least partly manufactured by a method according to at least one of claims 1 to 12.

15. Aircraft (1), comprising a component (50) according to claim 14.
